**Europäisches Patentamt**

**European Patent Office**

**Office européen des brevets**

(11) Veröffentlichungsnummer: **0 053 689**
**A2**

(12) ## EUROPÄISCHE PATENTANMELDUNG

(21) Anmeldenummer: 81108701.4

(22) Anmeldetag: 22.10.81

(51) Int. Cl.³: **G 01 N 27/28**
**G 01 N 27/56**

(30) Priorität: 10.12.80 DE 3046462

(43) Veröffentlichungstag der Anmeldung:
16.06.82 Patentblatt 82/24

(84) Benannte Vertragsstaaten:
BE CH DE FR GB LI NL

(71) Anmelder: BASF Aktiengesellschaft
Carl-Bosch-Strasse 38
D-6700 Ludwigshafen(DE)

(72) Erfinder: Kilpper, Gerhard, Dr.
Am Tannenhang 1
D-6719 Carlsberg(DE)

(72) Erfinder: Grimmer, Johannes
Duererstrasse 12
D-6700 Ludwigshafen(DE)

(54) Elektrochemisches Gerät zum Messen der Ionenkonzentration.

(57) Elektrochemisches Gerät zum Messen der Ionenkonzentration in Lösungen, mit mindestens einer Elektrode (3), die in einem Sondenrohr (2) gehalten und benachbart dessen in die zu untersuchende Lösung einzuführenden Ende angeordnet ist. Am anderen Ende des Sondenrohrs sind Haltemittel (9) angebracht, wobei das Sondenrohr mit einer Wärmequelle in Verbindung steht.

FIG.1

EP 0 053 689 A2

BASF Aktiengesellschaft                    O. Z. 0050/034806

Elektrochemisches Gerät zum Messen der Ionenkonzentration

Die Erfindung bezieht sich auf ein elektrochemisches Gerät zum Messen der Ionenkonzentration in Lösungen gemäß Oberbegriff des Patentanspruchs 1.

Zur Bestimmung der Konzentration eines bestimmten Ions in einer Lösung, beispielsweise der Wasserstoffionenkonzentration für die pH-Wert-Bestimmung, werden gewöhnlich Geräte benutzt, deren eingentliches Meßorgan eine Elektrode ist. Diese ist in einem Sondenrohr so gehalten, daß die Elektrodenoberfläche beim Eintauchen in die zu messende Lösung von dieser umspült werden kann. Normalerweise besteht die Elektrode aus einem hohlen Glaskörper mit einem Ionen-selektiven Teil, der einen Elektrolyten mit einem darin eingetauchten Draht enthält. Dieser ist an eine Meßschaltung angeschlossen, die zusätzlich noch mit einer Bezugselektrode verbunden sein kann. Die Bezugselektrode steht gewöhnlich ebenfalls mit der zu messenden Lösung in Kontakt. Ferner ist meist ein Temperaturkompensationswiderstand vorgesehen, durch den der Einfluß von Temperaturschwankungen auf das Meßergebnis kompensiert werden kann.

Niederschläge auf den Elektroden, beispielsweise durch kristalline Abscheidungen aus der Lösung, können zu Meßfehlern führen, die sich auf die Qualität der mit der Lösung hergestellten Produkte nachteilig auswirken und in vielen Fällen der Betriebssicherheit wegen nicht zulässig sind, wenn beispielsweise bestimmte pH-Werte verfahrensbedingt eingehalten werden müssen. Bei kontinuierlich ablaufenden Prozessen macht sich dieser Nachteil besonders bemerkbar, da für die Reinigung bzw. den Elektrodenwechsel der Produktionsprozess stillgesetzt werden muß.

Es sind in der Vergangenheit schon eine Reihe von Methoden und Einrichtungen zur Lösung dieses Problems entwickelt worden.

Die chemische Reinigung ist die gebräuchlichste Methode. Mit Hilfe einer Ringspüldüse oder einer mit Spülanschlüssen versehenen Kammer, von denen die zu reinigende Elektrode umgeben ist, wird diese in bestimmten Abständen mit einer Reinigungslösung oder Wasser besprüht. Durch das Reinigungsmittel wird jedoch die Ionenkonzentration in der Umgebung der Elektrode verändert, so daß die Messung und gegebenenfalls die damit zusammenhängende Regelung während der Reinigung unterbrochen werden müssen.

Mechanisch arbeitende Einrichtungen sind in Form von Bürsten oder Wischmembranen bekannt, die um die Elektrode rotieren oder sich auf- und abbewegen. Diese Reingungsart wird vorallem dort eingesetzt, wo sich auf den Elektroden pilzartige Beläge bilden. Bei Verunreinigungen durch Fette oder Öle ist sie weniger geeignet, da es zum Verschmieren des Fetts oder Öls auf der Elektrodenoberfläche kommen kann, wodurch die Funktion der Elektrode stark beeinträchtigt wäre. Bei kristallinen Niederschlägen zeigt sich, daß die Elektrode durch die Schleifwirkung der Bürsten oder Wischer einem starken mechanischen Verschleiß ausgesetzt ist.

Bekannt ist ferner die akustische Reinigung durch Ultraschall, bei der ein mit einem Ultraschallgenerator in Verbindung stehender Schwinger neben der Elektrode in die Lösung taucht. Mit ihr ist eine kontinuierliche Reinigung ohne Unterbrechung der Messung und ohne Reinigungsmittel möglich. Ultraschallreinigung eignet sich besonders gegen kristalline abscheidungen und solche aus emulsionsfähigen organischen Stoffen. Grobe Ablagerungen auf der Elektrode können mit ihrer Hilfe jedoch nicht ausreichend entfernt werden. Dabei bewirken die Kavitationskräfte des Ultraschalls eine gewisse Erosion der Glasoberfläche der Elektrode, wodurch deren Standzeit reduziert wird.

Durch die Verwendung spezieller Werkstoffe, beispielsweise Antimon, für die Elektrode kann eine Belagsbildung ebenfalls verhindert werden. Der Einsatzbereich solcher Elektroden ist dadurch begrenzt, daß sie in Lösungen, die reduzierende Stoffe enthalten, nicht verwendet werden können. Ultraschallreinigung ist hier wirkungslos.

Gelegentlich werden die beschriebenen Methoden und Einrichtungen auch miteinander kombiniert, um eine bessere Wirksamkeit zu erzielen. Derartige Maßnahmen erweisen sich jedoch als unbefriedigend im Hinblick auf den erforderlichen Aufwand und die damit erreichten Vorteile.

Es stellte sich daher die Aufgabe, ein elektrochemisches Gerät zum Messen der Ionenkonzentration in Lösungen mit Einrichtungen zu schaffen, mit denen eine Belagsbildung jeder Art auf der Elektrode wirkungsvoll und mit möglichst geringem Aufwand verhindert werden kann.

Die Aufgabe wurde durch ein elektrochemisches Gerät gelöst, wie es in den Patentansprüchen gekennzeichnet ist.

Die erfindungsgemäßen Maßnahmen bewirken, daß sich auf der Elektrodenoberfläche ein Belag erst gar nicht bildet, so daß ein störungsfreier Dauerbetrieb gewährleistet ist. Diesbezügliche Wartungen der Geräte sind nicht mehr erforderlich. Besonders vorteilhaft anzusehen ist dabei, daß mit gerätetechnisch sowie von der Konstruktion her einfachen Mitteln ohne Veränderung der Ionenkonzentration durch Reinigungslösungen und ohne mechanische Verschleißbeanspruchung eine volle Wirkung erreicht werden kann. Der Einfluß der erhöhten Temperatur auf das Meßergebnis kann durch bekannte Mittel, beispielsweise mit Hilfe des eingangs erwähnten Kompensationswiderstandes, kompensiert werden.

Das elektrochemische Gerät nach der Erfindung ist anhand in der Zeichnung dargestellter Ausführungsbeispiele nachfolgend erläutert.

Es zeigen:

Fig. 1    eine schematische Ansicht des Gerätes mit einem im Schnitt dargestellten Doppelmantelrohr

Fig. 2    eine schematische Ansicht des Gerätes mit elektrischen Heizelementen.

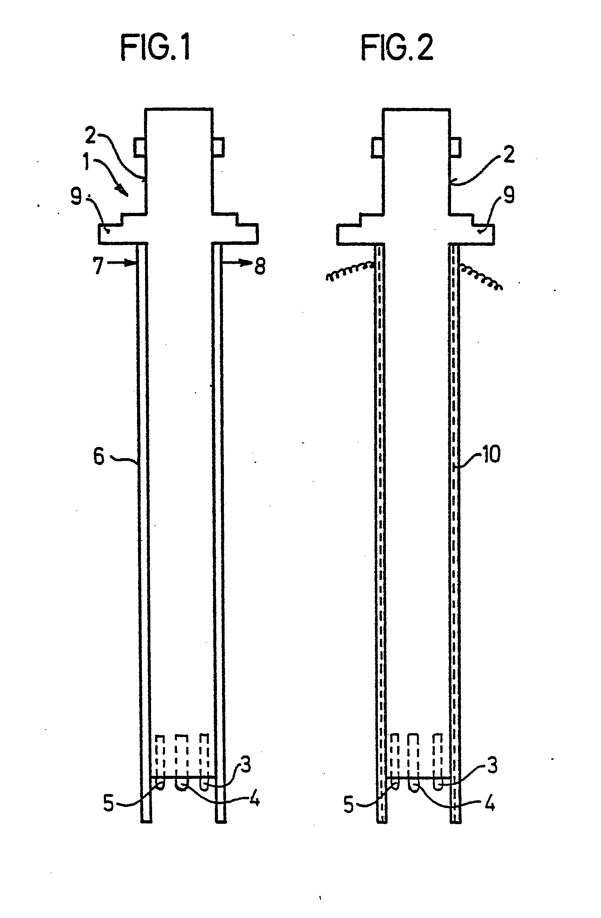

In Figur 1 ist eine Ausführungsform der Erfindung wiedergegeben, bei der ein mit 1 bezeichnetes, herkömmliches elektrochemisches Gerät, bestehend aus einem Sondenrohr 2 und darin gehaltenen Elektroden - eine Meß- und eine Bezugselektrode 3 und 4 - sowie Temperaturkompensationswiderstand 5, in ein Doppelmantelrohr 6 eingebracht ist. Dieses Doppelmantelrohr ist zum Durchströmen des Mantelraumes mit einem Heizmedium über Anschlußstutzen 7 und 8 an einen entsprechenden Kreislauf anschließbar, in dem beispielsweise Wasser oder Öl oder Luft mit Hilfe einer geeigneten Wärmequelle aufgeheizt wird. Zwischen der Außenfläche des Sondenrohres 2 und der Innenfläche des Doppelmantesrohres 6 besteht ein inniger Kontakt, um für einen guten Wärmeübergang zu sorgen. Auf diese Weise werden die Umgebung des Sondenrohres und damit die Elektroden 3 und 4 erwärmt. Es hat sich gezeigt, daß bei einer Erwärmung von 5°C bis 50°C, vorzugsweise 10°C bis 20°C über Umgebungstemperatur in dem zu messenden Medium die gewünschte Wirkung ausreichend vorhanden ist und die höhere

Temperatur der zu messenden Lösung bezüglich der Meßergebnisse noch gut kompensiert werden kann. Als Werkstoff für das Doppelmantelrohr kommen Stahl, Edelstahl, Titan, Tantal, Kunststoffe stahlarmiert oder auch beschichtete Stähle; vorzugsweise Stahl, Edelstahl, Titan, in Frage.

Mit Anthranilsäure-Maische, bei der es besonders leicht zu Belägen der Elektroden kommt, durchgeführte Vergleichsversuche zeigten, daß unter Zuhilfenahme der bisherigen Methoden eine Standzeit von etwa einem Tag zu erreichen war, während bei Anwendung der oben beschriebenen Aufheizung der Elektroden nach vier Wochen noch keine Belagsbildung zu beobachten war.

Oberhalb des Doppelmantelrohres 6 ist das Sondenrohr 2 mit einem Flansch 9 versehen, mit dem es an einer entsprechend passenden Vorrichtung einer Behälter- oder Rohrwand befestigt werden kann. Durch eine Öffnung in der Wand taucht das Sondenrohr in die im Behälter oder Rohr befindliche Lösung.

In einer weiteren zweckmäßigen Ausführungsform ist das Sondenrohr selbst als Doppelmantelrohr ausgeführt, wobei die Anschlußstutzen 7 und 8 auch oberhalb des Flansches 9 angeordnet sein können.

Das elektrochemische Gerät nach der Erfindung kann auch so ausgeführt sein, daß das Sondenrohr, wie in Figur 2 gezeigt, mit elektrisch beheizbaren Elementen 10, beispielsweise mit einer oder mehreren Widerstandsheizwendeln oder Heizstäben aus bekannten Materialien, umgeben ist. Eine weitere Möglichkeit besteht darin, das Sondenrohr induktiv zu erwärmen, sofern es aus elektrisch leitfähigem Material besteht.

Eine dielektrische Erwärmung mittels einer oder mehrerer entlang des Sondenrohres geführter Elektroden, die an einen Hochfrequenzgenerator angeschlossen sind, ist ebenfalls möglich, wenn das Sondenrohr aus einem Werkstoff besteht, dessen dielektrische Verluste groß sind.

## Patentansprüche

1. Elektrochemisches Gerät zum Messen der Ionenkonzentration in Lösungen, mit mindestens einer Elektrode (3), die in einem Sondenrohr (2) gehalten und benachbart dessen in die zu untersuchende Lösung einzuführenden Ende angeordnet ist, und mit am anderen Rohrende angebrachten Haltemitteln (9) für das Sondenrohr, dadurch gekennzeichnet, daß das Sondenrohr (2) mit einer Wärmequelle in Verbindung steht.

2. Elektrochemisches Gerät nach Anspruch 1, dadurch gekennzeichnet, daß das Sondenrohr (2) ein Doppelmantelrohr ist, das zum Durchströmen eines Heizmediums Anschlußstutzen (7,8) aufweist.

3. Elektrochemisches Gerät nach Anspruch 1, dadurch gekennzeichnet, daß das Sondenrohr (2) in einem von einem Heizmedium durchströmbaren Doppelmantelrohr (6) in innigem Kontakt mit dessen Innenfläche angeordnet ist.

4. Elektrochemisches Gerät nach Anspruch 1, dadurch gekennzeichnet, daß das Sondenrohr (2) elektrische beheizbar ist.

Zeichn.

FIG.1    FIG.2